# EUROPÄISCHE PATENTSCHRIFT

(11) **EP 3 766 812 B1**
(45) Veröffentlichungstag und Bekanntmachung des Hinweises auf die Patenterteilung: **18.09.2024**
(21) Anmeldenummer: 20000245.9
(22) Anmeldetag: 06.07.2020
(51) Int. Cl.: B65G 47/82

(54) **ENTPALETTIERMASCHINE MIT VORRICHTUNG FÜR DEN TRANSFER UND DIE AUFTEILUNG DER DEPALETTIERTEN LADUNG**
DEPALLETIZER WITH DEVICE FOR THE TRANSFER AND PARTITIONING OF DEPALLETIZED LOAD
MACHINE DE DÉPALLETISATION POURVU DE DISPOSITIF DE TRANSFERT ET DE DISTRIBUTION DE CHARGE DÉPALLETISÉE

(30) Priorität: 16.07.2019 IT 201900011853
(43) Veröffentlichungstag der Anmeldung: 20.01.2021
(73) Patentinhaber: Tanzer Maschinenbau S.r.l., 39011 Lana (BZ) (IT)
(72) Erfinder: Fliri, Adrian, I- 39020 Taufers im Münstertal (BZ) (IT)
(74) Vertreter: Oberosler, Ludwig

(56) Entgegenhaltungen:
- JP-A- H04 333 418
- US-A- 5 096 367
- US-A1- 2019 016 543
- ANONYMOUS: "Depalletizing", TANZER WEBPAGE, 9 December 2018 (2018-12-09), XP055684892, Retrieved from the Internet <URL:https://web.archive.org/web/20181209091044/http://www.tanzer.bz/en/products/depalletizing/> [retrieved on 20200409]

## Beschreibung

Die Erfindung bezieht sich auf eine Entpalettiermaschine welche für mehrere Arten von Paletten unterschiedlicher Ausmaße einsetzbar ist, welche z.B. mit gestapelten Gebinden, Packeinheiten oder mit gestapelten Waren beladen sind, wobei die Grundfläche der Stapel gleiche oder unterschiedliche Ausmaße haben und unterschiedlich in Längsrichtung oder in Querrichtung zur Entladungsrichtung angeordnet sind. Am Ausgang der Entpalettiermaschine ist eine Vorrichtung mit mehreren Transportbändern für den Transfer vorgesehen, welche geeignet ist um die Stapel mit unterschiedlichen Grundflächen und/oder mit unterschiedlicher Anordnung, bezogen auf die Entladungsrichtung, aufzunehmen.

Es sind Palettier- und Entpalettiermaschinen für die Beladung und die Entladung von Paletten oder Ladungsträger bekannt welche für eine spezifische Art von Paletten, mit genormten spezifischen Abmaßen geeignet sind, bekannt. Der Abtransport der Palette erfolgt:
- entweder infolge seitlichem Komprimieren der letzten untersten Schicht der Ladung, infolge leichtem Anheben der Last und Herausziehen der Palette mit anschließender Ablage der Last auf das darunter angeordnete Transportband,
- oder durch Abräumen der Last von der Palette und Verschieben auf ein, auf gleicher Höhe seitlich angeordnetes, Transportband.

Die bekannten Entpalettiermaschinen sind nicht für Verarbeitungslinien geeignet welche den Durchlauf von Paletten unterschiedlicher Art oder Herstellung und unterschiedlicher Ausmaße und/oder mit einer Ladung bestehend aus gestapelten Waren mit unterschiedlicher Stapelgrundfläche und unterschiedlicher Anordnung, betreffend die Entladungsrichtung, vorsehen.

Aus der US 5,096,367 ist ein "Verfahren zum Umgang mit Material" bekannt, wobei die Zufuhr der beladenen Paletten an eine Depalettiermaschine auf einer ersten unteren Ebene erfolgt, während die folgende Depalettierung auf einer zweiten höheren Ebene erfolgt, für das Erreichen welcher eine Hebebühne vorgesehen ist. Dabei erfolgt die Depalettierung nicht als Gesamtladung, sondern schichtweise gemäß horizontaler Schichten, wobei von jedem Stapel je ein, sich auf identischer Höhe befindender, Ladegegenstand abgeschoben wird. Die Depalletiermaschine hebt die Waren mit Palette an um eine Ebene zum abräumen der Waren zu erzielen und ist mit einem Abräumbalken ausgestattet, wobei die entleerte Palette quer zur Abräumrichtung des Palettenschichts bzw. Abräumbalken erfolgt.

Dieses "verfahren und die dargestellte und beschriebene Vorrichtung berücksichtigt nicht die unterschiedlichen Ausmaße der verschiedenen genormten und/oder handelsüblichen Paletten, die unterschiedlichen Ausmaße der auf diesen Paletten gestapelten Gesamtladung, die Beladung der Paletten mit unterschiedlicher Anordnung der Grundflächen der, die Gesamtladung bildenden, Stapel und die Aufteilung der einzelnen Stapel mit eventuell unterschiedlicher Grundfläche sowie deren Zuweisung auf spezifische Transportbänder zwecks geordneter Lagerung, bzw. nachfolgender Handhabung/Bearbeitung.

Aus der WO 2019/140473 A1 ist ein "Ladungsträger für Packeinheiten, Packeinheiten-Übergabestation sowie Kommissioniersystem zum Lagern und Kommissionieren von Packeinheiten" bekannt. Dieses Dokument bezieht sich vorrangig auf einen Ladungsträger welcher, zwecks Überbrücken von Höhenunterschied zwischen der Transferstation und der daran anschließenden Förderebene durch innenliegende Schrägflächen ausgleicht, bzw. welcher durch innenliegende, seitliche Einlagen mit unterschiedlichen Anschlagkanten die Packeinheiten mit unterschiedlicher Grundfläche aufnehmen können. Die gezeigte Packeinheiten-Übergabestation arbeitet mit den drei Fördereinrichtungen (Zufuhr des beladenen Ladungsträgers, Abfuhr der Ladung, Abfuhr des leeren Ladungsträgers) wesentlich in einer einzigen Ebene. Eventuelle unterschiedliche Abmaße der Ladungsträger, bzw. der Ladung, werden nicht berücksichtigt. Weiters wird auch die Handhabung von Ladungen, bestehend aus mindestens zwei Stapeln von Packeinheiten, nicht berücksichtigt

Die Erfindung stellt sich die Aufgabe eine mehrfunktionale Entpalettiermaschine der Art mit Abräumen der Last von der darunter angeordneten Palette auf ein daneben angeordnetes Transportband, für die einfache Handhabung der unterschiedlichen Paletten zu schaffen, welche mit gestapelten Waren beladen sind, deren Stapel eventuell unterschiedliche Grundflächen aufweisen und/oder, betreffend die Entladungsrichtung, unterschiedlich in Längs- und/oder in Querrichtung angeordnet sind.

Zur Lösung dieser Aufgabe schlägt die Erfindung eine Entpalettiermaschine vor welche seitlich, 90° zur Entladungsrichtung, beschickt wird, wobei die beladenen Paletten mit der oberen Bretterschicht, bzw. mit den Auflageelementen der Ladefläche, in Entladungsrichtung angeordnet sind und welche mit mehreren, zueinander parallelen, Transportketten oder -riemen einer ersten Transportvorrichrung ausgestattet ist welche alle gleichläufig angetrieben sind und so angeordnet sind, dass für jede Palette unterschiedlicher Art, bzw. mit unterschiedlichen Ausmaßen, eine stabile Auflage auf mindestens zwei Ketten oder Riemen gesichert ist. Vorteilhafterweise erfolgt die Entladung der leeren Paletten in die selbe Richtung wie die Beladungsrichtung und an der, der Beladungsseite, entgegengesetzten Seite.

Damit sich die erfindungsgemäße Entpalettiermaschine für Paletten unterschiedlicher Art und Abmaße, für unterschiedliche Abmaße der Grundfläche der Gesamtlast, für die unterschiedlichen Grundflächen der, die Last bildenden Stapel und für die unterschiedliche geometrische Anordnung der besagten Grundflächen, betreffend die Beladungsrichtung, eignet, ist diese mit verschiedenen verstellbaren Einrichtungen ausgestattet. Zwecks Verstellung in vertikaler Richtung der Position der Transportketten oder -riemen, der Höhe der Paletten entsprechend, zwecks Erreichen dass die Auflagefläche der Paletten immer komplanar oder leicht höher zur feststehenden Auflageebene am Auslauf der Entpalettiermaschine ist, welche komplanar mit der Ebene der Transportvorrichtungen, der vorgenannten feststehenden Auflageebene vorgeordnet ist, ist ein, z.B. hydraulischer, Bewegungsmechanismus vorgesehen welcher zwischen dem Rahmen der Entpalettiermaschine und dem Trägerrahmen der Transportketten der ersten Transportvorrichtung der Entpalettiermaschine wirkt.

Um die Wirkungsbreite des Abräumbalkens, welcher im unteren Bereich der Last wirkt, an die entsprechende Breite der gesamten, auf der Palette aufliegenden, Last anzupassen, ist der besagte Abräumbalken, betreffend die Breite einstellbar und vertikal verstellbar um der Position der Ladefläche der einzelnen, eventuell unterschiedlich hohen, Paletten angepasst werden zu können.

Zwecks Anpassung der Auflagefläche für die Last, am Auslauf aus der Entpalettiermaschine, an die Breite der gesamten Ladung, ist die besagte Auflagefläche an beiden Seiten mit einstellbaren Einleit- und Führungseinrichtungen ausgestattet.

Die erfindungsgemäße Entpalettiermaschine ist, dem Auslauf der Ladung nachgeordnet, mit einer mehrfunktionalen zweiten Transportvorrichtung ausgestattet um die gesamte Ladung einer oder mehreren bekannten Transportvorrichtungen zuzuführen, bzw. um die, die Ladung bildenden, Stapel aufzuteilen und um anschließend die einzelnen Stapel mit gleicher oder mit unterschiedlicher Grundfläche auf spezifischen Transportsystemen, z.B. zwecks Lagerung, gemäß der Art und/oder der Abmaße der gestapelten Gebinde oder Waren, zu transportieren. Die besagte zweite Transportvorrichtung zum Aufteilen und Transportieren der entpalettisierten Last besteht aus mindestens zwei Transfereinheiten, z.B. mit Transportbänder, Transportriemen, oder Transportketten, welche voneinander unabhängig, in Richtung 90° zur Entladungsrichtung, horizontal verstellbar sind und welche geeignete Breiten aufweisen um mindestens zwei Teile der gestapelten Last aufnehmen zu können, wobei die Grundflächen der Stapel unterschiedliche oder identische Abmaße haben können oder wobei diese geometrisch zur Entladungsrichtung in Längsrichtung oder quer angeordnet sind. Mittels der mindestens zwei besagten Transfereinheiten können die Stapel welche die entpalettierte Ladung bilden vereinzelt werden indem die einzelnen Transfereinheiten aus einer, während der Beladung, gegenseitig anliegenden Position verfahren werden um anschließend den oder die Stapel auf entsprechende bekannte Transportbänder zu transferieren welche der mehrfachen Transfer- und Aufteileinheit nachgeordnet sind. Im Fall dass die Gesamtladung aus mehreren Stapeln von Gebinden oder Gegenständen gleicher Art, bzw. gleicher Abmaße, zusammengesetzt ist, können diese natürlich auch direkt auf bekannte Transfervorrichtungen befördert werden, ohne die Ladung nach Stapel aufzuteilen.

Die Erfindung wird anschließend anhand eines, in den beigelegten Zeichnungen schematisch dargestellten, vorzuziehenden Ausführungsbeispiels einer erfindungsgemäßen Entpalettiermaschine mit Transfer- und Aufteilvorrichtung für die Ladung näher erklärt, dabei erfüllen die Zeichnungen rein erklärenden, nicht begrenzenden Zweck.

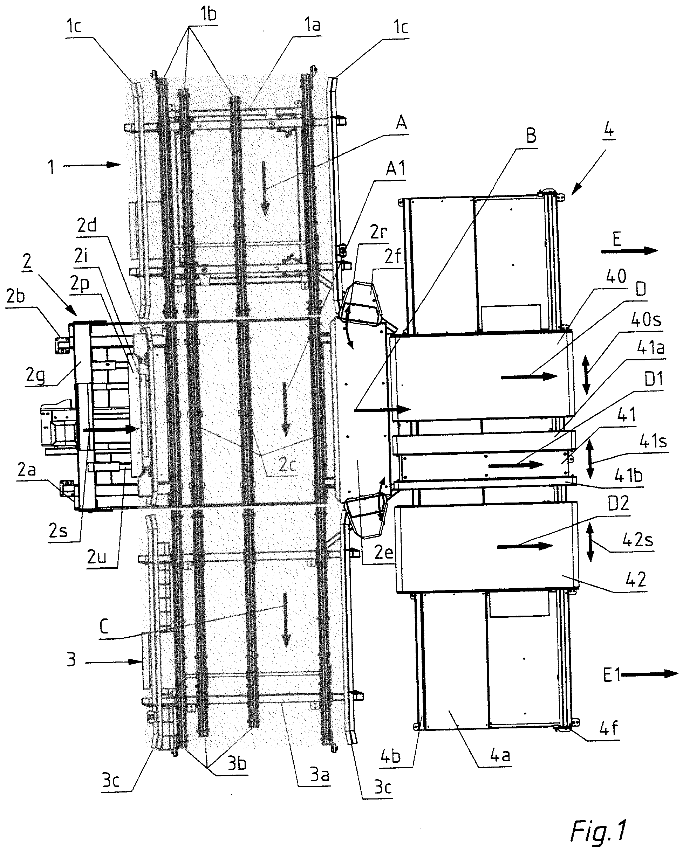

Die Fig. 1 zeigt die Draufsicht auf eine erfindungsgemäße Entpalettiermaschine samt Transfer- und Aufteilvorrichtung für die entpalettierte Ladung und samt den Vorrichtungen für die Zufuhr der beladenen Paletten samt Ladung und für die Abfuhr der entladenen Paletten.

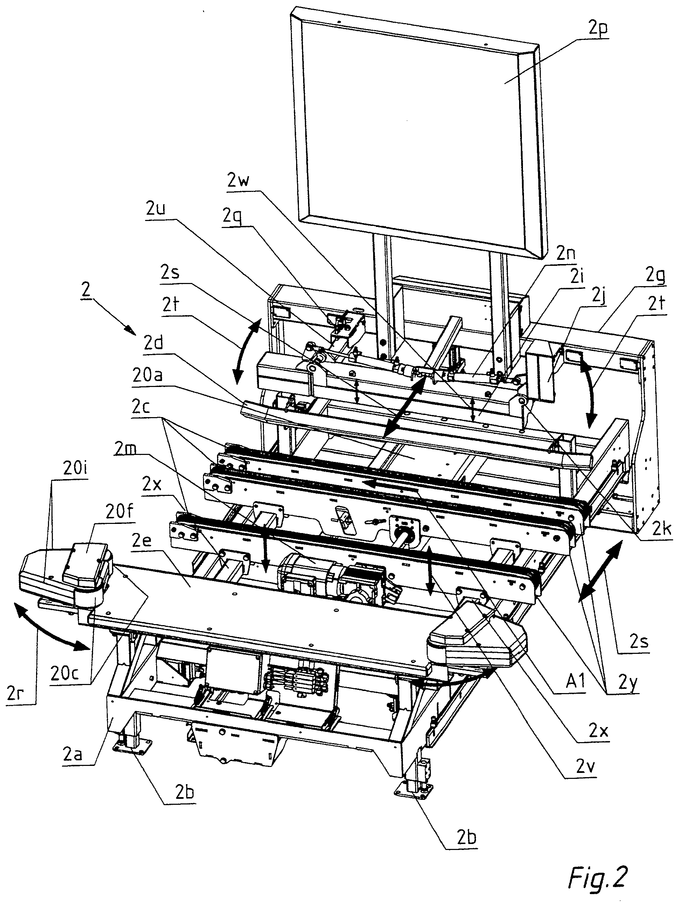

Die Fig. 2 zeigt in perspektivischer Darstellung die selbe erfindungsgemäße, in Fig. 1 gezeigte, Entpalettiermaschine ohne Transfer- und Aufteilvorrichtung für die entpalettierte Ladung.

Die Fig. 3 zeigt die Ansicht von unten der selben erfindungsgemäßen, in den Fig. 1 und 2 gezeigten, Entpalettiermaschine.

Die Fig. 4 zeigt die perspektivische Darstellung einer verstellbar gelagerten Einleit- und Führungsvorrichtung für die Anpassung an die Durchlaufbreite der Ladung auf der feststehenden Auflagefläche am Ausgang der Entpalettiermaschine.

Die Fig. 5 zeigt die perspektivische Darstellung eine Einleit- und Führungsvorrichtung welche an einer horizontalen Achse schwenkbar, für die Anpassung an die Durchlaufbreite der Ladung auf der feststehenden Auflagefläche am Ausgang der Entpalettiermaschine, gelagert ist.

Die Entpalettiermaschine 2 wird an einer Seite durch eine Zuführvorrichtung 1 für beladene Paletten beschickt, welche aus einem starren Rahmen 1a mit mehreren, zueinander parallelen, Transportketten oder -riemen besteht welche gleichlaufend, zueinander beabstandet, in einer einzigen Ebene arbeiten so dass die Paletten welche unterschiedliche Abmaße haben auf mindestens zwei von diesen aufliegen; seitlich sind Führungen 1c vorgesehen deren Enden einleitend ausgeformt sind. Die Paletten werden immer so zugeführt, dass die Brettchen oder die Elemente welche die Ladefläche bilden quer zur Zuführrichtung A ausgerichtet sind, so dass an der Entpalettiermaschine 2 die Entladungsrichtung B gemäß der Ausrichtung der besagten Brettchen erfolgen kann. Die selbe Entpalettiermaschine 2 ist an der gegenüberliegenden Seite mit einer Abführvorrichtung 3 für die entleerten Paletten versehen welche wesentlich die selben Merkmale der besagten Zuführvorrichtung 1 aufweist. Während der Zuführung A der beladenen Paletten und während der Abführung C der entleerten Paletten sind die Ketten oder Riemen 1b der Zuführvorrichtung 1, die eventuell entsprechenden Riemen oder Ketten 2c der Entpalettiermaschine 2 und die Riemen oder Ketten 3b der Abführvorrichtung 3 in einer einzigen Ebene und zueinander fluchtend ausgerichtet angeordnet.

Die Entpalettiermaschine 2 besteht aus einem starren Rahmen 2a welcher an der Unterseite mit vier vertikal einstellbaren Standbeinen 2b und mit einer in Längsrichtung angeordneter Gleitführung 20a für einen Laufwagen 20g ausgestattet ist, welcher mit einem bewegbaren und von einem, von einer Motorgruppe 20m angetriebenen, Riemen oder Kette 20 gezogenen 2s Rahmen 2g verbunden ist. Der bewegbare Rahmen 2g trägt 2q, mittels zweier, vertikal schwenkbarer 2w Arme 2u, einen horizontalen Abräumbalken 2i, welcher an beiden Enden, durch Hydraulikzylinder 2n schwenkbare 2t gelagert ist und Elemente 2j aufweist um die Wirkungsbreite des Abräumbalkens 2i zu verändern. Am selben beweglichen Rahmen 2g ist ein Auflageschild 2p befestigt, welcher wesentlich mit der vorderen Fläche des Abräumbalkens 2i in einer einzigen Ebene angeordnet ist.

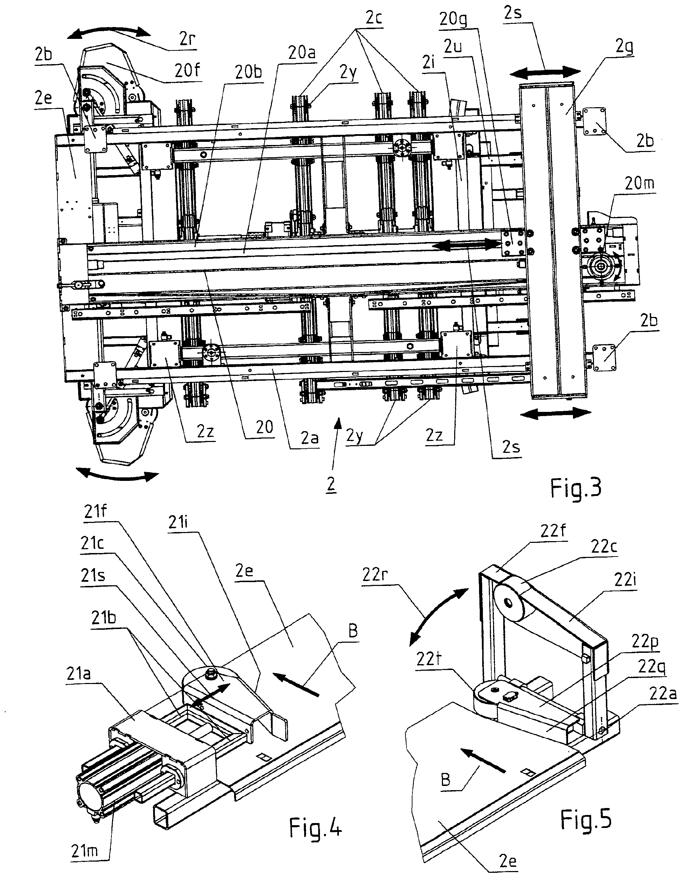

Mittels vier Hydraulikzylinder 2z, welche an den Holmen des Rahmens 2a befestigt sind, sind die Holme 2x, welche durch die Führungselemente 2y für die Transportketten oder -riemen 2c, welche alle durch einen einzigen Motor 2m angetrieben sind, vertikal 2v bewegbar. Die Vertikalbewegung 2v ermöglicht es die obere Auflagefläche der Paletten, welche auf den Ketten oder Riemen 2c aufliegen, in eine Position zu bringen welche mit der feststehenden Auflagefläche 2e auf welcher die Ladung verschoben B wird, in einer einzigen Ebene (oder leicht höher) liegt; die besagte Verschiebung B erfolgt indem die Ladung durch Betätigung 2s des beweglichen Rahmens 2g mit Abräumbalken 2i und Schild 2p von der auf den Ketten oder Riemen 2c der ersten Transportvorrichtung aufliegenden Palette, über die besagte mit dem Rahmen 2a verbundene Auflagefläche, in Richtung einer erfindungsgemäßen zweiten Transportvorrichtung 4 für den Transfer und die eventuelle Aufteilung der Ladung oder einer bekannten Transfervorrichtung, geschoben wird. Die vertikale Verstellung 2v erfolgt also in Abhängigkeit der Stärke (Höhe) der auf den Ketten oder Riemen 2c liegenden Palette. Die seitlichen Enden der feststehenden Auflagefläche 2e sind mit Einleit- und Führungsvorrichtungen 20f ausgestattet welche angewinkelte Einleitflächen 20i und Führungsrollen 20c aufweisen und um eine vertikale Achse schwenkbar 2r sind um für die Abführfase B die Durchlaufbreite, der Breite der Ladung, anpassen zu können. Erfindungsgemäß kann die Anpassung der Durchlaufbreite an der besagten Auflagefläche 2e auf unterschiedliche Art erreicht werden, z.B. durch horizontales Verschieben 21s einer Vorrichtung 21f (Fig. 4), welche eine angewinkelte Einleitfläche 21i und eine Führungsrolle 21c aufweist, mittels Hydraulikzylinder und Gleitführungen 21b welche sich in einer, an der Auflagefläche befestigten, Halterung 21 bewegen, oder durch eine feststehende Vorrichtung 22p (Fig. 5) welche eine angewinkelte Einleitfläche 22q und eine Führungsrolle 22t sowie einen, um eine horizontale Achse schwenkbaren 22r, Rahmen 22f aufweist; auch diese Vorrichtung ist mit einer angewinkelten Einleitfläche 22i und einer Führungsrolle 22c ausgestattet welche, in abgesenkter Position, eine Begrenzung der Durchlaufbreite für die Ladung B bewirken.

Die zweite Transportvorrichtung 4, bzw. die Transfer- und Aufteilvorrichtung für die Ladung besteht erfindungsgemäß wesentlich aus einem Untergestell oder Rahmen 4a mit vier verstellbaren Auflagefüßchen an welchem auf der, den Abräumbalken 2i entgegengesetzen Seite, zwei Längsführungen 4b vorgesehen sind, entlang welcher sich mindestens zwei Transfereinheiten 40, 41, 42, z.B. Transportbänder, voneinander unabhängig horizontal, quer zur Abräumbewegung 2s, bzw. zur Entladungsbewegung B, bewegen 40s, 41s, 42s können. Diese besagten Transfereinheiten 40, 41, 42 können einzeln, zueinander beabstandet oder nebeneinander, der feststehenden Auflagefläche 2e der Entpalettiermaschine 2 nachgeordnet, angeordnet sein um die, durch den Abräumbalken 2i und den Auflageschild 2p verschobene B Ladung, aufzunehmen. Die Anordnung der Transfergruppen 40, 41, 42 nebeneinander, hängt von der Zusammenstellung der einzelnen Stapel der aufzunehmenden Ladung, insbesondere von den Grundflächen der Stapel der Gebinde oder der Gegenstände und von deren geometrischer Anordnung, bezogen auf die Verschiebung oder die Entladungsrichtung B, ab. Die beweglichen Transfereinheiten werden so positioniert dass sie die gesamt Ladung so aufnehmen, dass die seitliche Berührungslinie zwischen den Transfereinheiten der vertikalen Berührungsfläche zwischen den Stapeln von Gebinden oder von Gegenständen welche die Ladung bilden und welche eventuell Grundflächen mit unterschiedlichen Abmaßen oder unterschiedliche geometrische Anordnung haben. Auf diese Weise ist es möglich, infolge Beladung der nebeneinander angeordneten Transfereinheiten, eine seitliche Verschiebung 40s, 41s, 42s dieser Stapel durchzuführen, wodurch die Aufteilung der Gesamtlast erfolgt um die spezifischen Positionen für den Transfer D, D1, D2 der Stapel von Gebinden oder Gegenständen, bezogen auf die Position der bekannten Transportvorrichtungen E, E1 zu erreichen, z.B. zwecks deren sortengebundene Lagerung, gemäß der Abmaße und/oder der Art der einzelnen gestapelten Stücke. Vorteilhafterweise sind drei Transfereinheiten vorgesehen und die mittlere Einheit 41 besteht aus zwei Transportriemen oder -ketten 41a, 41b welche beide gemeinsam angetrieben sind und eventuell unterschiedliche Breite haben und zueinander beabstandet angeordnet sind. Die Breite der besagten Riemen und der gegenseitige seitliche Abstand zueinander ist von den Abmaßen und/oder von der Form der Grundfläche der, die Last bildenden, Stapel bestimmt so dass diese, in einer Position neben einer der zwei Transfereinheiten 40, 42, einen Teil der Ladung mit der seitlichen Berührungslinie entsprechend der seitlichen Berührungslinie zwischen den Stapeln der gesamten Ladung, aufnehmen kann.

Um das Umstürzen der Stapel während der Aufteilung der Ladung, somit während der ersten Fase des seitlichen Verschiebens 40s, 41s, 42s der Transfereinheiten zu verhindern, erfolgt eine optische Überprüfung, z.B. mittels Laserstrahlen, um sicherzustellen dass kein Ineinandergreifen, kein Einhaken oder keine gegenseitige Überlagerung unter den Gegenständen welche nebeneinander liegende, zu distanzierende Stapel bilden, stattfindet.

## Patentansprüche

1. Entpalettiermaschine umfassend einen starren, rechteckigen horizontalen Rahmen (2a) mit vier, in den Eckbereichen des Rahmens angebrachten, vertikal einstellbaren Standbeinen (2b), eine erste Transfervorrichtung bestehend aus Holmen (2x) mit Führungselementen (2y) auf welchen, über einen einzigen Motor (2m) angetriebene Transportketten oder - riemen (2c) für die Aufnahme der zugeführten (A) beladenen Palette laufen und einen, längs einer Gleitführung (20a) am starren Rahmen (2a) verfahrbaren Laufwagen (20g) welcher einen Rahmen (2g) trägt, an welchem ein Abräumbalken (2i) sowie ein, mit dessen vorderer Fläche komplanares, Auflageschild (2p) angebracht ist um die Last von der Palette, über eine feststehende Auflagefläche (2e) hinweg in Querrichtung (B) zur Zuführrichtung (A) auf eine zweite Transfervorrichtung (4) für den Abtransport der Gesamtlast zu schieben (2s), wobei die gesamte erste Transfervorrichtung (2c, 2y, 2x) in Bezug auf den starren Rahmen (2a), mittels an den Holmen (2c) der ersten Transfervorrichtung befestigten vier Hydraulikzylinder (2z), vertikal verstellbar der Höhe der einzelnen Paletten entsprechend oder leicht höher, (2v) ist so dass die obere Auflagefläche der Palette eine Position einnimmt welche mit der feststehenden Auflagefläche (2e) in einer einzigen Ebene oder leicht höher liegt und dass der Abräumbalken (2i) vertikal schwenkbar oder verstellbar (2w) am Rahmen (2g) angebracht ist welcher, zusammen mit dem Laufwagen (20g), mittels einer Motorgruppe (20m) und Riemen oder Kette (20), in Querrichtung (B), bezogen auf die oder mechanisch Abführrichtung (A1) der entladenen Paletten, über die erste Transfervorrichtung (2c, 2y, 2x) hinweg, beweglich (2s) ist.

2. Entpalettiermaschine gemäß Anspruch 1, **dadurch gekennzeichnet, dass** der Abräumbalken (2i), in Abhängigkeit der Breite der abzuräumenden Gesamtlast, in der Breite veränderbar ist.

3. Entpalettiermaschine gemäß Anspruch 1, **dadurch gekennzeichnet, dass** die feststehende Auflagefläche (2e), über welche die Gesamtlast unter Schub (2s) des Abräumbalkens (2i), gleitet (B) an den seitlichen Enden mit Einleit- und Führungsvorrichtungen (20f, 21f, 22f) versehen ist, welche mindestens teilweise verstellbar (21s), schwenkbar oder drehbar (2r, 22r) sind so dass der freie Durchgang, bezogen auf die Breite der bewegten (B) Last, verändert wird.

4. Entpalettiermaschine gemäß Anspruch 1, **dadurch gekennzeichnet, dass** auf der feststehenden Auflagefläche (2e) oder im Bereich dieser, optische oder Lasergeräte, zwecks Erhebung eventueller Überlagerungen oder Ineinanderhaken der Gebinde oder Gegenstände der gegenseitig, seitlich anliegenden die Gesamtladung bildenden Stapel, vorgesehen sind.

5. Entpalettiermaschine gemäß Anspruch 1, **dadurch gekennzeichnet, dass** diese, mit einer, der Auflagefläche (2e) nachgeordneten, Transfer- und Aufteilvorrichtung (4) für die entpalettierte Last ausgestattet ist, welche aus mindestens einer Transfereinheit (40, 41, 42) besteht welche gleichläufig (D, D1, D2) mit der Abfuhrrichtung (B) der Entpalettiermaschine (2) wirkt und dass die besagten Transfereinheiten voneinander unabhängig in Querrichtung, entlang feststehender Führungen (4b) verstellbar (40s, 41s, 42s) sind, welche quer zur Abführrichtung (B) der Entpalettiermaschine angeordnet sind um, zwecks Übergabe (D, D1, D2) der Last an verschiedene nachfolgende bekannte Transportvorrichtungen (E, E1), unterschiedliche Positionen einnehmen zu können.

6. Entpalettiermaschine gemäß Anspruch 1, **dadurch gekennzeichnet, dass** die mindestens zwei Transfereinheiten der Transfer- und Aufteilvorrichtung (40, 41, 42) für die, die Entpalettiermaschine (2) verlassende (B) Last, derartige Breitenmaße haben, dass sie nebeneinander positioniert und entsprechend der Auflagefläche (2e) der Entpalettiermaschine (2), die Gesamtlast so aufnehmen können, dass die Berührungslinie zwischen den beiden Transfereinheiten (40. 41, 42) der Berührungslinie zwischen den, die Gesamtlast bildenden, Stapeln entspricht.

7. Entpalettiermaschine gemäß Anspruch 6, **dadurch gekennzeichnet, dass** an der Transfer- und Aufteilvorrichtung (40, 41, 42) für die, die Entpalettiermaschine (2) verlassende (B) Last, im Bereich der feststehenden Auflagefläche (2e) der Entpalettiermaschine, in den Berührungsbereichen zwischen den, die Last bildenden, nebeneinander liegenden, zu distanzierenden Stapeln, welche gemäß der Beladungsrichtung (B) ausgerichtet sind, optische oder Lasergeräte für die Erhebung eventueller Überlagerungen oder Ineinanderhaken zwischen den einzelnen Gebinden oder Gegenständen welche die Stapel der Last bilden, vorgesehen sind.

## Claims

1. A depalletising machine, comprising a rigid, rectangular horizontal frame (2a) including four vertically adjustable supporting legs (2b) being mounted in the corner regions of said frame, a first transfer device consisting of beams (2x) with guiding elements (2y) on which are running transport chains or belts (2c), driven via a single engine (2m), for receiving the fed (A) laden palette, and a carriage (20g), being drivable longitudinally to a sliding guide (20a) on said rigid frame (2a) carrying a frame (2g), on which is mounted a clearing beam (2i) as well as a supporting shield (2p) coplanar to the front face of said frame, to push (2s) the load from the palette past a stationary supporting surface (2e) in a transverse direction (B) to the feeding direction (A) onto a second transfer device (4) for transporting the total load, wherein the entire first transfer device (2c, 2y, 2x) with regard to the rigid frame (2a) being vertically adjustable corresponding to the height of the individual palettes or slightly higher by means of four hydraulic cylinders (2z) attached to the beams (2a) of the first transfer device, such that the upper supporting face of the palette takes a position in plane with or slightly higher than the stationary supporting face (2e), and that said clearing beam (2i) is vertically pivotably or adjustably (2w) attached on said frame (2g), in combination with said carriage (20g) in an transverse direction (B) with regard to the mechanical conveyance direction (A1) of the unloaded palettes being movable (2s) past said first transfer device (2c, 2y, 2x).

2. The depalletising machine according to claim 1, **characterized in that** said clearing beam (2i) being adjustable in width depending on the width of the total load to be cleared.

3. The depalletising machine according to claim 1, **characterized in that** said stationary supporting face (2e) over which the total load is sliding (B) through thrust (2s) of said clearing beam (2i) being provided with feeding and guiding devices (20f, 21f, 22f) on the lateral ends, being at least partially adjustable (21s), pivotable or rotatable (2r, 22r), such that the free passage with regard to the width of the moved (B) load is being changed.

4. The depalletising machine according to claim 1, **characterized in that** on said stationary supporting face (2e) or in its region being provided optical or laser devices for recognising possible overlaps or interleaving of the bundles or objects of the mutually laterally abutting staples forming the total load.

5. The depalletising machine according to claim 1, **characterized in that** said machine being provided with a transfer and segmentation device (4) for the depalletised load downstream said supporting face (2e), consisting of at least a transfer unit (40, 41, 42) acting in parallel feed (D, D1, D2) with said conveyance direction (B) of said depalletising machine (2), and **in that** said transfer units being independently from each other in the transverse direction along stationary guides (4b) adjustable (40s, 41s, 42s), being arranged transversally to the conveyance direction (B) of said depalletising machine, for attaining different positions for the purpose of handing over (D, D1, D2) the load to different following known transport devices (E, E1).

6. The depalletising machine according to claim 1, **characterized in that** said at least two transfer units of said transfer and segmentation device (40, 41, 42) having width dimensions for the load leaving (B) the depalletising machine (2) such that they can be positioned side by side and receive the total load corresponding to the supporting face (2e) of said depalletising machine (2), such that the contact line between the two transfer unit (40, 41, 42) corresponds to the contact line between the staples forming the total load.

7. The depalletising machine according to claim 6, **characterized in that** said for the load leaving (B) the depalletising machine (2) on the transfer and segmentation device (40, 41, 42) being provided optical or laser devices in the region of the stationary supporting face (2a) of said depalletising machine in the contact regions between the staples to be dissociated arranged side by side being oriented corresponding to the load direction for recognising possible overlaps or interleaving of the individual bundles or objects forming the staples of the load.

## Revendications

1. Machine de dépalettisation, comprenant un cadre horizontal rigide rectangulaire (2a) avec quatre pieds (2b) réglables verticalement, placés dans les coins du cadre, un premier dispositif de transfert composé de longerons (2x) avec des éléments de guidage (2y) sur lesquels circulent des chaînes ou des courroies de transport (2c) entraînées par un moteur (2m) unique, pour recevoir la palette chargée amenée (A), et un chariot (20g) mobile le long d'une glissière (20a) sur le cadre rigide (2a) et portant un cadre (2g) sur lequel sont montés une poutre de déblayage (2i) ainsi qu'un bouclier d'appui (2p) coplanaire avec la surface avant de celle-ci, pour pousser (2s) la charge de la palette, par-dessus une surface d'appui fixe (2e), dans la direction transversale (B) à la direction d'amenée (A), sur un deuxième dispositif de transfert (4) pour l'évacuation de la charge totale, dans laquelle
la totalité du premier dispositif de transfert (2c, 2y, 2x) est réglable verticalement par rapport au cadre rigide (2a), au moyen de quatre vérins hydrauliques (2z) fixés aux longerons (2c) du premier dispositif de transfert, dans une position correspondant à la hauteur des différentes palettes ou légèrement plus haut, (2v) de manière à ce que la surface d'appui supérieure de la palette prenne une position qui se situe dans un seul plan ou légèrement plus haut que la surface d'appui fixe (2e), et en ce que la poutre de déblayage (2i) est montée de manière verticalement pivotante ou réglable (2w) sur le cadre (2g), qui, avec le chariot (20g), est mobile (2s), au moyen d'un groupe moteur (20m) et d'une courroie ou d'une chaîne (20), dans une direction transversale (B) par rapport à la direction d'évacuation (A1) ou mécanique des palettes déchargées, par-dessus le premier dispositif de transfert (2c, 2y, 2x).

2. Machine de dépalettisation selon la revendication 1, **caractérisée en ce que** la largeur de la poutre de déblayage (2i) est susceptible d'être modifiée en fonction de la largeur de la charge totale à déblayer.

3. Machine de dépalettisation selon la revendication 1 , **caractérisée en ce que** la surface d'appui fixe (2e) sur laquelle glisse (B) la charge totale sous la poussée (2s) de la poutre de déblayage (2i) est munie à ses extrémités latérales de dispositifs d'introduction et de guidage (20f, 21f, 22f) qui sont au moins partiellement réglables (21s), pivotants ou rotatifs (2r, 22r) de manière à modifier le passage libre quant à la largeur de la charge en mouvement (B).

4. Machine de dépalettisation selon la revendication 1, **caractérisée en ce que** sur la surface d'appui fixe (2e) ou dans la zone de celle-ci, sont prévus des appareils optiques ou laser pour détecter d'éventuelles superpositions ou accrochages des emballages ou objets des piles mutuellement adjacentes formant la charge totale.

5. Machine de dépalettisation selon la revendication 1, **caractérisée en ce qu'**elle est pourvue, en aval de la surface d'appui (2e), d'un dispositif de transfert et de répartition (4) de la charge dépalettisée, constitué d'au moins une unité de transfert (40, 41, 42) agissant dans le même sens (D, D1, D2) que le sens d'évacuation (B) de la machine de dépalettisation (2) et **en ce que** lesdites unités de transfert sont déplaçables(40s, 41s, 42s), indépendamment les unes des autres, dans le sens transversal, le long de guides fixes (4b) disposés transversalement à la direction d'évacuation (B) de la machine de dépalettisation afin de pouvoir prendre différentes positions en vue du transfert (D, D1, D2) de la charge à différents dispositifs de transport (E, E1) connus suivants.

6. Machine de dépalettisation selon la revendication 1, **caractérisée en ce que** les au moins deux unités de transfert du dispositif de transfert et de répartition (40, 41, 42) de la charge (B) quittant la machine de dépalettisation (2) ont des dimensions en largeur telles que, positionnées côte à côte et en correspondance avec la surface d'appui (2e) de la machine de dépalettisation (2) elles sont susceptibles de recevoir la charge totale, de telle sorte que la ligne de contact entre les deux unités de transfert (40, 41, 42) corresponde à la ligne de contact entre les piles formant la charge totale.

7. Machine de dépalettisation selon la revendication 6, **caractérisée en ce que**, sur le dispositif de transfert et de répartition (40, 41, 42) pour la charge (B) quittant la machine de dépalettisation (2), dans la zone de la surface d'appui fixe (2e) de la machine de dépalettisation, dans les zones de contact entre les piles formant la charge (B) et la surface d'appui fixe (2e) de la machine de dépalettisation orientées dans la direction de chargement (B), des appareils optiques ou laser sont prévus pour la détection d'éventuelles superpositions ou accrochages entre les différents emballages ou objets formant les piles de la charge.
